# EUROPEAN PATENT APPLICATION

(11) **EP 4 435 881 A1**
(43) Date of publication of application: **25.09.2024**
(21) Application number: 24164014.3
(22) Date of filing: 17.03.2024
(51) Int. Cl.: H01M 4/04, H01M 4/131, H01M 4/36, H01M 4/48, H01M 10/052, H01M 4/02

(54) **POSITIVE ELECTRODE PLATE AND BATTERY**

(30) Priority: 20.03.2023 CN 202310269388
(71) Applicant: Zhuhai Cosmx Power Battery Co., Ltd., Zhuhai, Guangdong 519180 (CN)
(72) Inventor: CHEN, Bo, Beijing, 300308 (CN); CHEN, Yao, Beijing, 300308 (CN); LI, Junyi, Beijing, 300308 (CN); LIU, Jianming, Beijing, 300308 (CN)
(74) Representative: Murgitroyd & Company

(57) **Abstract**

The present disclosure relates to the field of battery technologies, and specifically, to a positive electrode plate and a battery including the same. The positive electrode plate includes a positive electrode current collector and a positive electrode active material layer disposed on either or both sides of the current collector. The positive electrode active material layer includes a first active material layer located in a middle region of a surface of the positive electrode current collector along a length direction and a second active material layer located at edges. A specific capacity of the first active material in the first active material layer is greater than that of the second active material in the second active material layer.

## Description

### FIELD OF THE INVENTION

The present disclosure relates to the field of battery technologies, and specifically, to a positive electrode plate and a battery including the positive electrode plate.

### BACKGROUND OF THE INVENTION

With the advent of the 5G era, polymer lithium-ion batteries are becoming increasingly important, and people's demand for battery life of new electronic devices gradually rises. This requires lithium-ion battery manufacturers to continue to spare no effort to improve energy density of lithium batteries.

Nowadays, the development of various materials is getting closer to a limit, and development costs are getting higher. For lithium-ion batteries, it is a very effective way to increase energy density by further increasing surface density of electrode plates, which has the lowest dependence on material technologies and is a universal method that can be applied to a variety of product systems. However, increasing surface density of electrode plates can easily cause a problem of edge lithium precipitation of a negative electrode plate, further causing performance of the battery cell to deteriorate.

Therefore, it is very important to invent a battery that can alleviate edge lithium precipitation of a negative electrode and that has high energy density and more stable cycling performance.

### BRIEF OF THE INVENTION

An objective of the present disclosure is to overcome the foregoing problem existing in the prior art and provide a positive electrode plate and a battery including the positive electrode plate. The battery prepared by using the positive electrode plate in the present disclosure can alleviate a problem of edge lithium precipitation of the negative electrode and has a higher energy density and better cycling performance.

To achieve the foregoing objectives, a first aspect of the present disclosure provides a positive electrode plate. The positive electrode plate includes a positive electrode current collector and a positive electrode active material layer disposed on either or both sides of the positive electrode current collector. The positive electrode active material layer includes a first active material layer and a second active material layer, the first active material layer is located in a middle region of a surface of the positive electrode current collector along a length direction, and the second active material layer is located at edges on both sides of the surface of the positive electrode current collector along the length direction or the second active material layer is located at surrounding edges of the surface of the positive electrode current collector.

The first active material layer includes a first active material, the second active material layer includes a second active material, and a specific capacity of the first active material is greater than a specific capacity of the second active material.

A second aspect of the present disclosure provides a battery, and a positive electrode plate of the battery is the positive electrode plate described in the first aspect of the present disclosure.

In an example, the battery includes a first region and a second region. The first region is a region including the first active material layer, and a CB (cell balance) value of the first region is: CB₁ = (Surface density of a negative electrode plate * Specific capacity of a negative electrode active material * Content of the negative electrode active material)/(Surface density of the positive electrode plate * Specific capacity of a first active material in the first region * Content of the first active material in the first region). The second region is a region including the second active material layer, and a CB value of the second region is: CB₂ = (Surface density of the negative electrode plate * Specific capacity of the negative electrode active material * Content of the negative electrode active material)/(Surface density of the positive electrode plate * Specific capacity of a second active material in the second region * Content of the second active material in the second region), where CB₁ < CB₂.

In an example, 0 < CB₂ - CB₁ ≤ 0.15.

Based on the foregoing technical solutions, the present disclosure has at least the following advantages over the conventional technology.

The battery provided in the present disclosure can alleviate a problem of lithium precipitation of the negative electrode plate, and has a high energy density, good cycling stability, and long service life.

Other features and advantages of the present disclosure are described in detail in the subsequent Detailed Description of the Embodiments.

### BRIEF DESCRIPTION OF THE DRAWINGS

FIG. 1 is a top view of a positive electrode plate according to an embodiment of the present disclosure.
FIG. 2 is a top view of a positive electrode plate according to another embodiment of the present disclosure.
FIG. 3 is a physical diagram of a negative electrode plate disassembled from a battery prepared in Example 1 of the present disclosure (a color of the negative electrode plate is relatively uniform, and no edge lithium precipitation occurs) after 20 cycles of charge/discharge.
FIG. 4 is a physical diagram of a negative electrode plate disassembled from a battery prepared in Comparative Example 1 (a darker part of an edge region indicates lithium precipitation, that is, edge lithium precipitation has occurred) after 20 cycles of charge/discharge.

### DETAILED DESCRIPTION OF THE INVENTION

Specific embodiments of the present disclosure are described below in detail. It should be understood that the specific implementations described herein are merely used for the purposes of illustrating and explaining the present disclosure, rather than limiting the present disclosure.

During the use of a battery, a potential at an edge of a negative electrode plate is lower than a potential in the middle. Therefore, under a high surface density, lithium precipitation is likely to occur at the edge of the negative electrode plate, thereby reducing cycling stability of the battery.

It is found by the inventors of the present disclosure that optimizing the positive electrode plate can alleviate a problem of lithium precipitation of the negative electrode plate, and improve an energy density and cycling stability of the battery.

After further in-depth research, it is found by the inventors of the present disclosure that in order to optimize the positive electrode plate, capacities of a middle region and an edge region of the positive electrode plate can be achieved differently, thereby alleviating a problem of lithium precipitation of the negative electrode plate and improving cycling performance of the battery.

A first aspect of the present disclosure provides a positive electrode plate. The positive electrode plate includes a positive electrode current collector and a positive electrode active material layer disposed on either or both sides of the positive electrode current collector. The positive electrode active material layer includes a first active material layer and a second active material layer, the first active material layer is located in a middle region of a surface of the positive electrode current collector along a length direction, and the second active material layer is located at edges on both sides of the surface of the positive electrode current collector along the length direction or the second active material layer is located at surrounding edges of the surface of the positive electrode current collector.

The first active material layer includes a first active material, the second active material layer includes a second active material, and a specific capacity of the first active material is greater than a specific capacity of the second active material.

Regarding technologies for improving surface densities of positive and negative electrode plates, while taking into account charging capabilities under high surface densities, there are currently many studies on the use of high-pressure fast-charging graphite materials for negative electrode plates, which mainly rely on technological innovation of graphite materials. However, the technological innovation of graphite materials have two difficulties: (1) High-pressure fast-charging graphite materials significantly reduce a specific capacity of graphite, resulting in no significant increase in energy density. (2) an actual charging capacity of high-pressure fast-charging graphite materials generally does not exceed 1.5C; otherwise, it is difficult for a press density to achieve 1.75 g/cm³ or higher.

In the present disclosure, with an existing material system, distribution of the positive electrode active material in the positive electrode plate is optimized, to dispose positive electrode active materials with different specific capacities in the middle region and the edge region of the positive electrode plate, so that the positive electrode active material located in the middle region and edge region of the positive electrode plate have different specific capacities at a same voltage. A specific capacity of the middle region is greater than a specific capacity of the edge region, to cause kinetic differences, thereby alleviating a problem of lithium precipitation of the negative electrode plate.

The positive electrode plate is optimized in the foregoing manner, so that the positive electrode plate can achieve higher energy density and more stable cycling performance than the conventional technology. In order to further improve effects, one or more of the technical features can be further selected.

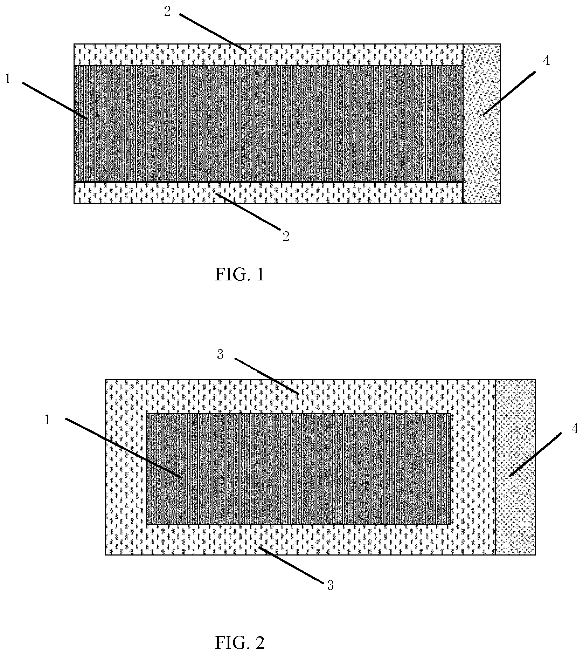

The first active material layer is located in the middle region 1 along the length direction of the surface of the positive electrode current collector, as shown in FIG. 1 and FIG. 2.

The second active material layer is located at edges 2 on both sides of the surface of the positive electrode current collector along the length direction or the second active material layer is located at surrounding edges 3 of the surface of the positive electrode current collector. As shown in FIG. 1, the second active material layer is located at the edges 2 on both sides of the surface of the positive electrode current collector along the length direction. As shown in FIG. 2, the second active material layer is located at the surrounding edges 3 of the surface of the positive electrode current collector.

In an example, a region of the first active material layer is connected to or overlaps a region of the second active material layer. Regardless of whether they are connected or overlapping, a problem of lithium precipitation of the negative electrode plate can be alleviated.

The second active material layer may be connected to the first active material layer. As shown in FIG. 1, the first active material layer located in the middle region 1 of the surface of the positive electrode current collector along the length direction is connected to the second active material layer located at the edges 2 on both sides of the surface of the positive electrode current collector along the length direction, and foil uncoated region 4 is located at one end. As shown in FIG. 2, the first active material layer located in the middle region 1 of the surface of the positive electrode current collector along the length direction is connected to the second active material layer located at the surrounding edges 2 of the surface of the positive electrode current collector, and the foil uncoated region 4 is located at one end.

The first active material layer may include a first active material, the second active material layer may include a second active material, and a specific capacity of the first active material is greater than a specific capacity of the second active material. When the specific capacity of the first active material is greater than the specific capacity of the second active material, a capacity achieved by an edge region of the positive electrode plate can be lower than a capacity achieved by the middle region, thereby alleviating a problem of edge lithium precipitation of the negative electrode plate.

In an example, the specific capacity of the first active material ranges from 125 mAh/g to 190 mAh/g (for example, is 125 mAh/g, 130 mAh/g, 140 mAh/g, 150 mAh/g, 160 mAh/g, 170 mAh/g, 180 mAh/g, or 190 mAh/g).

In an example, the specific capacity of the second active material ranges from 120 mAh/g to 190 mAh/g (for example, is 120 mAh/g, 125 mAh/g, 130 mAh/g, 140 mAh/g, 150 mAh/g, 160 mAh/g, 170 mAh/g, 180 mAh/g, or 190 mAh/g).

In an example, the specific capacity of the first active material is 0.1 mAh/g to 240 mAh/g (for example, 0.1 mAh/g, 0.5 mAh/g, 1 mAh/g, 5 mAh/g, 10 mAh/g, 15 mAh/g, 25 mAh/g, 30 mAh/g, 35 mAh/g, 40 mAh/g, 45 mAh/g, 50 mAh/g, 100 mAh/g, 150 mAh/g, 200 mAh/g, or 240 mAh/g) greater than the specific capacity of the second active material. When the specific capacity of the first active material is greater than the specific capacity of the second active material, under a same surface density, a CB value of a middle region of the electrode plate is less than a CB value of an edge region of the electrode plate. That is, for the negative electrode plate, lithium intercalation sites in a middle region of the negative electrode plate are less than those in an edge region, to ensure enough lithium intercalation sites in the edge region of the negative electrode plate. This can effectively alleviate edge lithium precipitation of the negative electrode plate.

In an example, the specific capacity of the first active material is 0.8 mAh/g to 60 mAh/g greater than the specific capacity of the second active material.

In the present disclosure, a specific capacity of a material is measured by a 0.2C discharge capacity test method. A specific test method is: placing a battery cell in an environment of 25±2°C, keeping it stand for 4 hours, charging it to an upper limit voltage with a constant current and constant voltage at a rate of 0.2C, stopping the charging at a cut-off current of 0.05C, then keeping it stand for 5 minutes, discharging to a lower limit voltage with a constant current of 0.2C, and recording the discharge capacity as Q₀; measuring a weight of the positive electrode plate during a battery manufacturing process, and obtaining active material content m₀ of the battery after removing the mass of current collector and auxiliary materials; and calculating a specific capacity of the material as G=Q₀/m₀.

According to a specific implementation, an area of a region of the first active material layer is S₁, an area of a region of the second active material layer is S₂, and S₁ and S₂ satisfy the following relationship: 0 < S₂/S₁ ≤ 0.5 (for example, 0.001, 0.005, 0.01, 0.05, 0.1, 0.15, 0.2, 0.25, 0.3, 0.35, 0.4, 0.45, or 0.5). Because the specific capacity of the first active material layer is higher, when 0 < S₂/S₁ ≤ 0.5, it can be ensured that the prepared battery cell has higher energy density.

As shown in FIG. 1, when the second active material layer is located at the edges of both sides of the surface of the positive electrode current collector along the length direction, the area S₂ of the region of the second active material layer is a sum of areas of the edges on both sides. As shown in FIG. 2, when the second active material layer is located on the surrounding edges of the surface of the positive electrode current collector, the area S₂ of the region of the second active material layer is a sum of areas of the surrounding edges.

In an example, 0.005 ≤ S₂/S₁ ≤ 0.15.

According to a specific implementation, a surface density of the first active material layer is the same as a surface density of the second active material layer. That is, a surface density of the positive electrode plate is uniform without edge thinning, so that a body of the battery cell has higher flatness.

In an example, the surface density of the positive electrode plate ranges from 10 mg/cm² to 30 mg/cm² (for example, is 10 mg/cm², 12 mg/cm², 15 mg/cm², 18 mg/cm², 20 mg/cm², 21 mg/cm², 22 mg/cm², 23 mg/cm², 24 mg/cm², 25 mg/cm², 26 mg/cm², 27 mg/cm², 28 mg/cm², 29 mg/cm², or 30 mg/cm²). In the present disclosure, the surface density of the positive electrode plate refers to a surface density of one side of the positive electrode plate. When there is the positive electrode active material layer on one side of the positive electrode current collector, the surface density of the positive electrode plate is a surface density of this side (that is, the side with the positive electrode active material layer). When there are the positive electrode active material layers on both sides of the positive electrode current collector, the surface densities of both sides of the positive electrode plate are the same, and the surface density of the positive electrode plate is a surface density on either side. The positive electrode plate with a surface density meeting the foregoing range helps maximize a capacity, increase energy density, and also improve cycling performance.

In an example, the surface density of the positive electrode plate ranges from 15 mg/cm² to 25 mg/cm².

According to a specific implementation, the first active material layer and the second active material layer have a same press density, that is, the press density of the positive electrode plate is uniform.

In the present disclosure, a method for testing a surface density of a material includes: taking a related electrode plate (coated on both sides) with an area of S_{electrode plate}; and measuring a weight of the related electrode plate with an area of S_{electrode plate} as m_{electrode plate}; and calculating the surface density of the electrode plate as: C_{w}=m_{electrode plate}/S_{electrode plate}/2.

In an example, the press density of the positive electrode plate ranges from 1 g/cm³ to 5 g/cm³ (for example, is 1 g/cm³, 2 g/cm³, 2.5 g/cm³, 3.0 g/cm³, 3.5 g/cm³, 4 g/cm³, 4.5 g/cm³, or 5 g/cm³). In the present disclosure, the press density of the positive electrode plate refers to a press density of one side of the positive electrode plate. When there is the positive electrode active material layer on one side of the positive electrode current collector, the press density of the positive electrode plate is a press density of this side (that is, the side with the positive electrode active material layer). When there are the positive electrode active material layers on both sides of the positive electrode current collector, the press densities of both sides of the positive electrode plate are the same, and the press density of the positive electrode plate is a press density on either side. The positive electrode plate with a press density meeting the foregoing range can increase the energy density of the battery cell.

In an example, the press density of the positive electrode plate ranges from 2.5 g/cm³ to 4.3 g/cm³.

In the present disclosure, a method for measuring a press density of a material is: measuring a total thickness of an electrode plate, subtracting a thickness of the current collector from it, and then dividing the obtained value by 2, to obtain a thickness h₀ of a single side; and calculating a press density of the electrode plate: P_{D} = C_{W}/h₀.

According to a specific implementation, the first active material layer and the second active material layer have a same thickness. The first active material layer and the second active material layer have a same thickness, which can not only ensure consistency of the thickness of the positive electrode plate, but also enable coating of the positive electrode plate to be controlled according to a normal a coating standard during coating and rolling processes, so as to ensure that coating weight, the thickness, and appearance are normal.

In an example, a median particle size D₅₀ of the second active material is greater than a median particle size D₅₀ of the first active material. Limiting sizes of the median particle sizes of the first active material and the second active material can improve the press density of the positive electrode plate, and in addition, help increase energy density of the entire battery cell.

In an example, a difference between the median particle size D₅₀ of the second active material and the median particle size D₅₀ of the first active material is greater than or equal to 2 µm (for example, is 2 µm, 5 µm, 10 µm, or 15 µm). The relative sizes of the median particle sizes of the first active material and the second active material are optimized, so that advantages of the first active material and the second active material can be comprehensively utilized, thereby increasing overall energy density of the battery cell.

In the present disclosure, a median particle size D₅₀ of a material is measured by a laser particle size analyzer (LS-909).

In an example, the first active material includes one or more of lithium cobalt oxide (LCO), lithium iron phosphate (LFP), lithium manganese iron phosphate, lithium manganate, lithium nickelate, lithium nickel-manganese oxide (LNMO), a ternary material (such as a nickel-cobalt-aluminum ternary material (NCA) or a nickel-cobalt-manganese ternary material (NCM)), lithium nickel-cobalt-manganese aluminate (NCMA), and a lithium-rich manganese-based material (LRM).

In an example, the second active material includes one or more of lithium cobalt oxide (LCO), lithium iron phosphate (LFP), lithium manganese iron phosphate, lithium manganate, lithium nickelate, lithium nickel-manganese oxide (LNMO), a ternary material (such as a nickel-cobalt-aluminum ternary material (NCA) or a nickel-cobalt-manganese ternary material (NCM)), lithium nickel-cobalt-manganese aluminate (NCMA), and a lithium-rich manganese-based material (LRM).

According to a specific implementation, the first active material includes a ternary material.

According to a specific implementation, the first active material includes one or more of a nickel-cobalt-aluminum ternary material and a nickel-cobalt-manganese ternary material.

According to a specific implementation, the second active material includes lithium cobalt oxide.

According to a specific implementation, the first active material includes one or more of a nickel-cobalt-aluminum ternary material and a nickel-cobalt-manganese ternary material, and the second active material includes lithium cobalt oxide.

According to a specific implementation, the first active material includes a monocrystalline ternary material and/or a polycrystalline ternary material.

According to a specific implementation, the nickel-cobalt-aluminum ternary material and the nickel-cobalt-manganese ternary material each separately include a monocrystalline ternary material and/or a polycrystalline ternary material.

In an example, a chemical formula of the monocrystalline ternary material is LiₐNiₓCo_{y}Mn_{1-x-y}AₖO₂ (0 < x < 1, 0 ≤ y < 1, 0.9 ≤ a ≤ 1.1, and 0 ≤ k ≤ 0.05), where A is a doping element. Preferably, A is selected from one or more of Al, Mg, Ti, La, Zr, V, Nb, Si, F, O, B, Cu, Sn, N, P, Y, Zr, N, C, Au, and Ag.

In an example, a chemical formula of the monocrystalline ternary material is LiₐNiₓCo_{y}Al_{1-x-y}AₖO₂ (0 ≤ x ≤ 1, 0 ≤ y ≤ 1, 0.9 ≤ a ≤ 1.1, and 0 ≤ k ≤ 0.05), where A is a doping element. Preferably, A is selected from one or more of Mn, Mg, Ti, La, Zr, V, Nb, Si, F, O, B, Cu, Sn, N, P, Y, Zr, N, C, Au, and Ag.

In an example, a crystal structure of the monocrystalline ternary material is a layered structure.

In an example, a median particle size D₅₀ of the monocrystalline ternary material ranges from 1 µm to 6 µm (for example, is 1 µm, 2 µm, 3 µm, 4 µm, 5 µm, or 6 µm). Appropriately reducing D₅₀ of the monocrystalline material to this range can increase a reactive area and appropriately improve C-rate performance of the monocrystalline ternary material.

In an example, a median particle size D₅₀ of the monocrystalline ternary material ranges from 2 µm to 4 µm.

In the present invention, unless otherwise specified, D₅₀ refers to Dv₅₀.

In an example, a chemical formula of the polycrystalline ternary material is LiₐNiₓCo_{y}Mn_{1-x-y}AₖO₂ (0 ≤ x ≤ 1, 0 ≤ y ≤ 1, 0.9 ≤ a ≤ 1.1, and 0 ≤ k ≤ 0.05), where A is selected from one or more of Al, Mg, Ti, Y, and Zr.

In an example, a chemical formula of the polycrystalline ternary material is LiₐNiₓCo_{y}Al_{1- x-y}AₖO₂ (0 ≤ x ≤ 1, 0 ≤ y ≤ 1, 0.9 ≤ a ≤ 1.1, and 0 ≤ k ≤ 0.05), where A is selected from one or more of Mn, Mg, Ti, Y, and Zr.

In an example, a crystal structure of the polycrystalline ternary material is a layered structure.

In an example, a median particle size D₅₀ of the polycrystalline ternary material ranges from 7 µm to 20 µm (for example, is 7 µm, 8 µm, 9 µm, 10 µm, 11 µm, 12 µm, 13 µm, 15 µm, 16 µm, 17 µm, or 20 µm). Appropriately increasing the median particle size of the polycrystalline material to this range can improve high-temperature stability of the polycrystalline material while ensuring enough C-rate performance.

In an example, a median particle size D₅₀ of the polycrystalline ternary material ranges from 8 µm to 12 µm.

In an example, a median particle size D₅₀ of the lithium cobalt oxide ranges from 5 µm to 25 µm (for example, is 5 µm, 7 µm, 10 µm, 12 µm, 15 µm, 17 µm, 20 µm, 22 µm, or 25 µm).

In an example, a median particle size D₅₀ of the lithium cobalt oxide ranges from 12 µm to 18 µm.

According to a specific implementation, the first active material layer includes a first conductive agent and a first binder.

In an example, the first conductive agent is selected from one or more of carbon black, mesophase microspheres, acetylene black, ketjen black, conductive graphite, conductive carbon fiber, carbon nanotubes (CNTs), metal powder, carbon fiber, single-walled carbon tubes, and multi-walled carbon tubes.

In an example, the first binder is selected from one or more of polyvinylidene fluoride (PVDF), sodium carboxymethyl cellulose, polyurethane, polyvinyl alcohol, polyvinylidene fluoride, a copolymer of vinylidene fluoride-fluorinated olefin, and polymethyl methacrylate (PMMA).

In an example, based on a total weight of the first active material layer, weight content of the first active material ranges from 80 wt% to 99.8 wt%, weight content of the first conductive agent ranges from 0.1 wt% to 10 wt%, and weight content of the first binder ranges from 0.1 wt% to 10 wt%.

In an example, based on a total weight of the first active material layer, weight content of the first active material ranges from 90 wt% to 99.6 wt%, weight content of the first conductive agent ranges from 0.2 wt% to 5 wt%, and weight content of the first binder ranges from 0.2 wt% to 5 wt%.

According to a specific implementation, the second active material layer includes a second conductive agent and a second binder.

In an example, the second conductive agent is selected from one or more of carbon black, mesophase microspheres, acetylene black, ketjen black, conductive graphite, conductive carbon fiber, carbon nanotubes (CNTs), metal powder, carbon fiber, single-walled carbon tubes, and multi-walled carbon tubes.

In an example, the second binder is selected from one or more of polyvinylidene fluoride (PVDF), sodium carboxymethyl cellulose, polyurethane, polyvinyl alcohol, polyvinylidene fluoride, a copolymer of vinylidene fluoride-fluorinated olefin, and polymethyl methacrylate (PMMA).

In an example, based on a total weight of the second active material layer, weight content of the second active material ranges from 80 wt% to 99.8 wt%, weight content of the second conductive agent ranges from 0.01 wt% to 10 wt%, and weight content of the second binder ranges from 0.01 wt% to 10 wt%.

In an example, based on a total weight of the second active material layer, weight content of the second active material ranges from 90 wt% to 99.6 wt%, weight content of the second conductive agent ranges from 0.02 wt% to 5 wt%, and weight content of the second binder ranges from 0.02 wt% to 5 wt%.

A second aspect of the present disclosure provides a battery, and a positive electrode plate of the battery is the positive electrode plate described in the first aspect of the present disclosure.

Materials and preparation methods of the battery except the positive electrode plate can be implemented according to the art, and effects of high energy density and stable cycling performance can be achieved.

In an example, the positive electrode plate includes a positive electrode current collector and a positive electrode active material layer disposed on either or both sides of the positive electrode current collector. The positive electrode active material layer includes a first active material layer and a second active material layer, and the first active material layer is located in a middle region of a surface of the positive electrode current collector along a length direction. The second active material layer is located at edges on both sides of the surface of the positive electrode current collector along the length direction or the second active material layer is located at surrounding edges of the surface of the positive electrode current collector. The first active material layer includes a first active material, and the second active material layer includes a second active material.

In an example, a region of the first active material layer is connected to or overlaps a region of the second active material layer.

For other descriptions about the positive electrode plate, refer to the first aspect. Details are not described herein again.

According to a specific implementation, the battery includes a first region and a second region. The first region is a region including the first active material layer, and a CB value of the first region is: CB₁ = (Surface density of a negative electrode plate * Specific capacity of a negative electrode active material * Content of the negative electrode active material)/(Surface density of the positive electrode plate * Specific capacity of a first active material in the first region * Content of the first active material in the first region). The second region is a region including the second active material layer, and a CB value of the second region is: CB₂ = (Surface density of the negative electrode plate * Specific capacity of the negative electrode active material * Content of the negative electrode active material)/(Surface density of the positive electrode plate * Specific capacity of a second active material in the second region * Content of the second active material in the second region), where CB₁ < CB₂.

The positive electrode plate is optimized, and different active materials are disposed in middle and edge regions of the positive electrode plate, so that a difference between CB₁ of the first region and CB₂ of the second region of the battery is generated, to alleviate a problem of edge lithium precipitation under high surface density and achieve effects of both high energy density and stable cycling performance.

In an example, 0 < CB₂ - CB₁ ≤ 0.15 (for example, 0.01, 0.02, 0.03, 0.04, 0.05, 0.06, 0.07, 0.08, 0.09, 0.1, 0.11, 0.12, 0.13, 0.14, or 0.15).

In an example, 0.0008 ≤ CB₂ - CB₁ ≤ 0.06.

In an example, the battery includes a negative electrode plate. The negative electrode plate may be a conventional negative electrode plate in the art. For example, the negative electrode plate includes a negative electrode current collector and a negative electrode active material layer disposed on either or both sides of the negative electrode current collector. The negative electrode active material layer includes a negative electrode active material.

In an example, the negative electrode active material is selected from one or more of a carbon-based negative electrode material (such as artificial graphite, natural graphite, mesocarbon microbeads, hard carbon, and soft carbon) and a silicon-based negative electrode material.

According to a specific implementation, a surface density of the negative electrode plate ranges from 4 mg/cm² to 16 mg/cm² (for example, is 10 mg/cm², 11 mg/cm², 12 mg/cm², 13 mg/cm², 14 mg/cm², 15 mg/cm², or 16 mg/cm²). In the present disclosure, the surface density of the negative electrode plate refers to a surface density of one side of the negative electrode plate. When there is the negative electrode active material layer on one side of the negative electrode current collector, the surface density of the negative electrode plate is a surface density of this side. When there are the negative electrode active material layers on both sides of the negative electrode current collector, the surface densities of both sides of the negative electrode plate are the same, and the surface density of the negative electrode plate is a surface density on either side.

In an example, the surface density of the negative electrode plate ranges from 10 mg/cm² to 13 mg/cm².

In an example, a press density of the negative electrode plate ranges from 1.5 g/cm³ to 1.9 g/cm³ (1.5 g/cm³, 1.6 g/cm³, 1.7 g/cm³, 1.8 g/cm³, or 1.9 g/cm³). In the present disclosure, the press density of the negative electrode plate refers to a press density of one side of the negative electrode plate. When there is the negative electrode active material layer on one side of the negative electrode current collector, the press density of the negative electrode plate is a press density of this side. When there are the negative electrode active material layers on both sides of the negative electrode current collector, the press densities of both sides of the negative electrode plate are the same, and the press density of the negative electrode plate is a press density on either side. When the press density is within this range, energy density of a battery prepared by using the positive electrode plate and the negative electrode plate described in the present disclosure can be improved.

In an example, the press density of the negative electrode plate ranges from 1.7 g/cm³ to 1.8 g/cm³. When the press density is within this range, energy density of a battery cell can be further improved.

In an example, the negative electrode active material layer includes a third conductive agent and a third binder.

In an example, the third conductive agent is selected from one or more of carbon black, mesophase microspheres, acetylene black, ketjen black, conductive graphite, conductive carbon fiber, carbon nanotubes (CNTs), metal powder, carbon fiber, single-walled carbon tubes, and multi-walled carbon tubes.

In an example, the third binder is selected from one or more of styrene-butadiene rubber (SBR), sodium carboxymethyl cellulose, polyurethane, polyvinyl alcohol, and polymethyl methacrylate (PMMA).

In an example, based on a total weight of the negative electrode active material layer, weight content of the negative electrode active material ranges from 80 wt% to 99.8 wt%, weight content of the third conductive agent ranges from 0.1 wt% to 10 wt%, and weight content of the third binder ranges from 0.1 wt% to 10 wt%.

In an example, based on a total weight of the negative electrode active material layer, weight content of the negative electrode active material ranges from 90 wt% to 99.6 wt%, weight content of the third conductive agent ranges from 0.2 wt% to 5 wt%, and weight content of the third binder ranges from 0.2 wt% to 5 wt%.

In an example, the negative electrode active material layer is made by applying a negative active slurry on a surface of the negative electrode current collector.

In an example, solid content of the negative active slurry ranges from 40 wt% to 49 wt% (for example, is 40 wt%, 41 wt%, 42 wt%, 43 wt%, 44 wt%, 45 wt%, 46 wt%, 47 wt%, 48 wt%, or 49 wt%).

In an example, a viscosity of the negative active slurry ranges from 2000 mPa·s to 6000 mPa s (for example, is 2000 mPa s, 3000 mPa s, 4000 mPa s, 5000 mPa s, or 6000 mPa s).

In the present disclosure, a viscosity of a material is measured by a viscometer (NDJ-5S/8S).

The battery in the present disclosure includes the positive electrode plate in the present disclosure, so that energy density of the battery is improved, cycling stability is improved, and cycle life is prolonged.

The following describes the present disclosure in detail by using embodiments. The embodiments described in the present disclosure are merely some, but not all of the embodiments of the present disclosure. All other embodiments obtained by a person of ordinary skill in the art based on the embodiments of the present disclosure without creative efforts fall within the protection scope of the present disclosure.

The following examples are used to illustrate preparation of the positive electrode plate in the present disclosure.

### Example 1a

### (1) Material preparation

Positive electrode current collector: 10µm aluminum foil.

First active material slurry: first active material (a nickel-cobalt-manganese ternary material, which is obtained by mixing a polycrystalline ternary material with D₅₀ ranging from 10 µm to 12 µm and a monocrystalline ternary material with D₅₀ ranging from 2 µm to 4 µm, and has a specific capacity of 190 mAh/g @4.2 V, where @4.2 V means that the specific capacity is measured at a voltage of 4.2 V) with 97 wt%, a first conductive agent (multi-walled carbon tubes) with 1.5 wt%, and a first binder (PVDF) with 1.5 wt%.

Second active material slurry: second active material (a lithium cobalt oxide material (for its D₅₀, refer to Table 1), which has a specific capacity of 160 mAh/g @4.2 V) with 97 wt%, second conductive agent (multi-walled carbon tube) with 1.5 wt%, and second binder (PVDF) with 1.5 wt%.

### (2) Preparation of a positive electrode plate

Refer to the schematic diagram shown in FIG. 1. The prepared first active material slurry and the second active material slurry were applied on the positive electrode current collector by using an extrusion coater to obtain a first active material layer located in a middle region along a length direction and a second active material layer located on both sides of the first active material layer. Surface densities of the first active material layer and the second active material layer were both 22 mg/cm², and press densities of the first active material layer and the second active material layer were both 3.8 g/cm³. A coating width of the first active material layer was 570 mm, and a coating width of the second active material layer was 30 mm (a width of each side is 15 mm). A sum of widths of the first active material layer and the second active material layer was 600 mm. The first active material layer and the second active material layer had a same coating length and a same thickness. After a coating process was completed, the positive electrode plate was prepared.

### Example 1b

This example is used to illustrate impact caused when D₅₀ of the first active material and D₅₀ of the second active material changed.

This examples were implemented with reference to Example 1, except that D₅₀ of the first active material was 14 µm, and D₅₀ of the second active material was 10 µm. For details, refer to Table 1.

### Example Group 2

This group of examples is used to illustrate impact caused when S₂/S₁ changed.

This group of examples was implemented with reference to Example 1, except that the coating width of the second active material layer were/was changed. For details, refer to Table 1.

### Example Group 3

This group of examples is used to illustrate impact caused when there was a change in a specific capacity of the first active material and/or a specific capacity of a specific capacity of the second active material.

This group of examples was implemented with reference to Example 1, except that there was a change in a specific capacity of the first active material and/or a specific capacity of the second active material. For details, refer to Table 1.

### Example Group 4

This group of examples is used to illustrate impact caused when a surface density of the positive electrode plate changed.

This group of examples was implemented with reference to Example 1, except that a surface density of the positive electrode plate was changed. For details, refer to Table 1.

### Example Group 5

This group of examples is used to illustrate impact caused when the first active material and/or the second active material changed.

This group of examples was implemented with reference to Example 1, except that there was a change in the first active material and/or the second active material. For details, refer to Table 1.

### Comparative Example 1

This example was implemented with reference to Example 1, except that the second active material was replaced with the nickel-cobalt-manganese ternary material used in Example 1.

### Comparative Example 2

This example was implemented with reference to Example 1, except that the first active material was replaced with the lithium cobalt oxide material used in Example 1, and the second active material was replaced with the nickel-cobalt-manganese ternary material used in Example 1.

**Table 1**

| | **First active material** | **Coating width of first active material layer (mm)** | **Second active material** | **Coating width of second active material layer (mm)** | **specific capacity of first active material (Ah/g)** | **specific capacity of second active material (Ah/g)** | **Surface density of positive electrode plate (mg/cm²)** | **S₂/S₁** | **CB₂-CB₁** |
|---|---|---|---|---|---|---|---|---|---|
| Example 1a | NCM (D₅₀=10) | 570 | LCO (D₅₀=14) | 30 | 190 | 160 | 22 | 0.05 | 0.03 |
| Example 1b | NCM (D₅₀=14) | 570 | LCO (D₅₀=10) | 30 | 190 | 160 | 22 | 0.05 | 0.03 |
| Example 2a | * | 595 | * | 5 | * | * | 22 | 0.008 | * |
| Example 2b | * | 530 | * | 70 | * | * | * | 0.13 | * |
| Example 2c | * | 500 | * | 100 | * | * | * | 0.2 | * |
| Example 2d | * | 375 | * | 225 | * | * | * | 0.6 | * |
| Example 3a | * | * | * | * | 185 | 180 | * | * | 0.005 |
| Example 3b | * | * | * | * | 195 | 125 | * | * | 0.07 |
| Example 3c | * | * | * | * | 195 | 155 | * | * | 0.04 |
| Example 3d | * | * | * | * | 195 | 185 | * | * | 0.01 |
| Example 3e | * | * | * | * | 142 | 140 | * | * | 0.0006 |
| Example 3f | * | * | * | * | 210 | 105 | * | * | 0.16 |
| Example 4a | * | * | * | * | * | * | 28 | * | * |
| Example 4b | * | * | * | * | * | * | 15 | * | * |
| Example 4c | * | * | * | * | * | * | 9 | * | * |
| Example 4d | * | * | * | * | * | * | 32 | * | * |
| Example 5a | NCM | * | LFP | * | 190 | 140 | * | * | 0.05 |
| Example 5b | * | * | NCA | * | 190 | 182 | * | * | 0.008 |
| Example 5c | LRM | * | LNMO | * | 205 | 185 | * | * | 0.02 |
| Comparative Example 1 | * | * | NCM | * | * | * | * | * | * |
| Comparative Example 2 | LCO | * | NCM | * | 160 | 190 | * | * | * |

| | | | | | | | | | |
|---|---|---|---|---|---|---|---|---|---|
| * indicates that this item is the same as that in Example 1. | | | | | | | | | |

### Preparation Example

Batteries were prepared in the following manner by using the positive electrode plates obtained in Examples and Comparative Examples.

### (1) Preparation of a positive electrode plate

The positive electrode plates obtained in the foregoing Examples and Comparative Examples were used respectively.

### (2) Preparation of a negative electrode plate

A negative electrode active slurry was prepared by using graphite, a binder, CMC: carbon black at a ratio of 96.5%: 1.5%: 1.5%: 0.5% (by weight). After the slurry was prepared, a coating process was completed according to a coating control standard. A surface density of the negative electrode plate is 12.0 mg/cm², and a press density is 1.8 g/cm³.

### (3) Separator

A commercially available Asahi Kasei 5+2+2 oil-based separator was used.

### (4) Electrolyte solution

Lithium hexafluorophosphate (LiPF₆) was dissolved in a mixed solvent composed of ethylene carbonate (EC), dimethyl carbonate (DEC) and ethyl methyl carbonate (EMC) (at a mass ratio of 1:1:1) to obtain an electrolyte solution.

### (5) Preparation of a battery

According to an existing manufacturing process of polymer lithium-ion batteries, rolling was implemented based on process design to ensure that press densities of positive and negative electrodes meet process requirements, and then plate fabrication (tab welding) and winding (positive electrode separator and negative electrode) were implemented. Then encapsulation, electrolyte injection, and formation were performed, and secondary sealing was performed to ensure that a residual liquid volume coefficient reaches or exceeds 1.3. Finally, after sorting, preparation of a soft-packed polymer lithium-ion battery was completed.

### Test Example

The batteries obtained in the Examples and Comparative Examples were tested as follows.

### (1) 25°C cycling performance test

The battery was charged and discharged for 700 cycles at 25°C at a rate of 1C within charge and discharge cut-off voltage ranges. A discharge capacity of the first cycle was calculated as x₁ mAh, and a discharge capacity of the N^{th} circle was calculated as y₁ mAh. The capacity of the N^{th} cycle was divided by the capacity of the first cycle to obtain a cycling capacity retention rate of the N^{th} cycle as R₁=y₁/x₁.

### (2) 45°C cycling performance test

The battery was charged and discharged for 500 cycles at 45°C at a rate of 1C within charge and discharge cut-off voltage ranges. A discharge capacity of the first cycle was tested and recorded as A₁ mAh, a discharge capacity of the N^{th} circle was tested and recorded as B₁ mAh. The capacity of the N^{th} cycle was divided by the capacity of the first cycle to obtain a cycling capacity retention rate of the N^{th} cycle as R₂=B₁/A₁.

### (3) Lithium precipitation test

The battery obtained after 20 cycles of charge/discharge at 25°C was disassembled, to check lithium precipitation of the negative electrode plate. If lithium was not precipitated, "No" was given. If lithium is precipitated, "yes" was given.

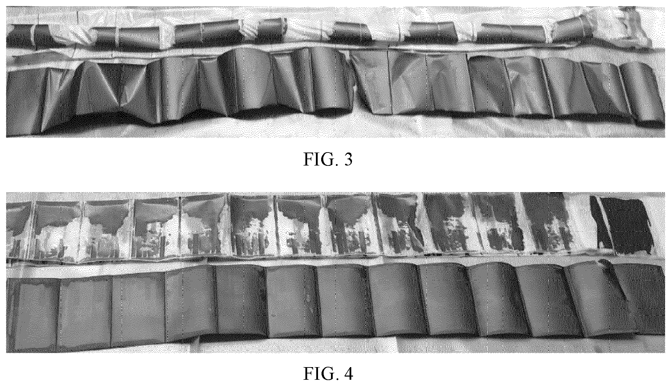

FIG. 3 is a physical diagram of a negative electrode plate disassembled from a battery prepared in Example 1 of the present disclosure after 20 cycles of charge/discharge. A color of the negative electrode plate is relatively uniform, and no edge lithium precipitation occurs.

FIG. 4 is a physical diagram of a negative electrode plate disassembled from a battery prepared in Comparative Example 1 after 20 cycles of charge/discharge. A darker part of an edge region indicates lithium precipitation, that is, edge lithium precipitation has occurred.

### (4) Energy density test

(a) Model dimensions of a battery cell were: 4.0 (mm, thickness, H) * 60 (mm, width, W) * 90 (mm, height, L). That is, Volume V of the battery cell = Thickness * Width * Height.
(b) The battery cell was placed in an environment of 25±3°C and kept for 2 hours, and then was charged to a full current with a constant current and constant voltage at a rate of 0.5C. A cut-off current was 0.025C. After 5 minutes, the battery cell was discharged to 3.0 V at a rate of 0.2C, and its discharge capacity Q and platform voltage U were recorded.
(c) A calculation formula of a volumetric energy density of the battery cell is: ED = Q*U/(H*W*L).

Results obtained from the test examples were recorded in Table 2.

**Table 2**

| | **Cycling capacity retention rate at 25°C** | **Cycling capacity retention rate at 45°C** | **Edge lithium precipitation of a negative electrode plate** | **Energy density (Wh/L)** |
|---|---|---|---|---|
| Example 1a | 700T, 87.8% | 500T, 86.2% | No | 813 |
| Example 1b | 700T, 79.1% | 500T, 80.7% | No | 811 |
| Example 2a | 700T, 85.1% | 500T, 85.7% | No | 816 |
| Example 2b | 700T, 84.5% | 500T, 84.4% | No | 808 |
| Example 2c | 700T, 84.7% | 500T, 84.1% | No | 790 |
| Example 2d | 700T, 81.6% | 500T, 82.7% | Yes | 752 |
| Example 3a | 700T,85.4% | 500T, 84.8% | No | 802 |
| Example 3b | 700T,79.5% | 500T,79.9% | Yes | 809 |
| Example 3c | 700T,84.6% | 500T,83.3% | No | 816 |
| Example 3d | 700T,82.3% | 500T,81.6% | No | 819 |
| Example 3e | 700T, 75.7% | 500T, 73.2% | Yes | 747 |
| Example 3f | 700T, 76.4% | 500T, 75.3% | Yes | 833 |
| Example 4a | 700T, 78.4% | 500T, 77.7% | No | 841 |
| Example 4b | 700T, 83.6% | 500T, 82.7% | No | 794 |
| Example 4c | 700T, 85.7% | 500T, 84.1% | No | 743 |
| Example 4d | 700T, 78.3% | 500T, 77.1% | Yes | 846 |
| Example 5a | 700T, 84.5% | 500T, 83.9% | No | 798 |
| Example 5b | 700T, 81.6% | 500T, 82.1% | No | 809 |
| Example 5c | 700T, 80.3% | 500T, 80.1% | No | 832 |
| Comparative Example 1 | 700T, 73.3% | 500T, 76.6% | Yes | 789 |
| Comparative Example 2 | 700T, 76.9% | 500T, 75.4% | Yes | 783 |

It can be learned, from Table 2 and through Comparative examples and Examples, that both the energy density and the cycling capacity retention rate of the battery prepared by using the positive electrode plate in Examples can be taken into consideration, and a problem of edge lithium precipitation of the negative electrode plate is alleviated. It indicates that, according to the positive electrode plate in the present disclosure and the battery including the positive electrode plate, distribution of the positive electrode active material in the positive electrode plate is optimized, thereby alleviating a problem of lithium precipitation of the negative electrode plate and prolonging service life of the battery.

A preferred implementation of the present disclosure is described below in detail. However, the present disclosure is not limited thereto. Within the scope of the technical concepts of the present disclosure, various simple variations may be implemented to the technical solutions of the present disclosure, including combinations of technical features in any other suitable manner. These simple variations and combinations shall also be considered as the disclosure of the present disclosure and shall fall within the protection scope of the present disclosure.

## Claims

1. A positive electrode plate, **characterized in that** the positive electrode plate comprises a positive electrode current collector and a positive electrode active material layer disposed on either or both sides of the positive electrode current collector; and the positive electrode active material layer comprises a first active material layer and a second active material layer, the first active material layer is located in a middle region of a surface of the positive electrode current collector along a length direction, and the second active material layer is located at edges on both sides of the surface of the positive electrode current collector along the length direction or the second active material layer is located at surrounding edges of the surface of the positive electrode current collector,
wherein the first active material layer comprises a first active material, the second active material layer comprises a second active material, and a specific capacity of the first active material is greater than a specific capacity of the second active material.

2. The positive electrode plate according to claim 1, **characterized in that** a region of the first active material layer is connected to or overlaps a region of the second active material layer;
preferably, the specific capacity of the first active material is 125 mAh/g to 190 mAh/g, and the specific capacity of the second active material ranges from 120 mAh/g to 190 mAh/g;
preferably, the specific capacity of the first active material is 0.1 mAh/g to 240 mAh/g greater than the specific capacity of the second active material;
more preferably, the specific capacity of the first active material is 0.8 mAh/g to 60 mAh/g greater than the specific capacity of the second active material.

3. The positive electrode plate according to claim 1 or 2, **characterized in that** an area of a region of the first active material layer is S₁, an area of a region of the second active material layer is S₂, and S₁ and S₂ satisfy the following relationship: 0 < S₂/S₁ ≤ 0.5, preferably, 0.005 ≤ S₂/S₁ ≤ 0.15.

4. The positive electrode plate according to any one of claims 1 to 3, **characterized in that** the first active material layer and the second active material layer have a same surface density; preferably, a surface density of the positive electrode plate ranges from 10 mg/cm² to 30 mg/cm²;
and/or, the first active material layer and the second active material layer have a same press density; preferably, a press density of the positive electrode plate ranges from 1 g/cm³ to 5 g/cm³;
and/or, the first active material layer and the second active material layer have a same thickness.

5. The positive electrode plate according to any one of claims 1 to 4, **characterized in that** a median particle size D₅₀ of the second active material is greater than a median particle size D₅₀ of the first active material.
preferably, a difference between the median particle size of the second active material and the median particle size of the first active material is greater than or equal to 2 µm.

6. The positive electrode plate according to any one of claims 1 to 5, **characterized in that** the first active material comprises one or more of lithium cobalt oxide, lithium iron phosphate, lithium manganese iron phosphate, lithium manganate, lithium nickelate, lithium nickel-manganese oxide, a ternary material, lithium nickel-cobalt-manganese aluminate, and a lithium-rich manganese-based material; preferably, the first active material comprises one or more of a nickel-cobalt-aluminum ternary material and a nickel-cobalt-manganese ternary material;
and/or, the second active material comprises one or more of lithium cobalt oxide, lithium iron phosphate, lithium manganese iron phosphate, lithium manganate, lithium nickelate, lithium nickel-manganese oxide, a nickel-cobalt-aluminum ternary material, a nickel-cobalt-manganese ternary material, lithium nickel-cobalt-manganese aluminate, and a lithium-rich manganese-based material; preferably, the second active material comprises lithium cobalt oxide.

7. The positive electrode plate according to claim 6, **characterized in that** the first active material comprises a monocrystalline ternary material and/or a polycrystalline ternary material.
preferably, a crystal structure of the monocrystalline ternary material is a layered structure;
preferably, a crystal structure of the polycrystalline ternary material is a layered structure.

8. The positive electrode plate according to claim 7, **characterized in that** a median particle size D₅₀ of monocrystalline ternary material ranges from 1 µm to 6 µm; preferably, ranges from 2 µm to 4 µm;
and/or, a median particle size D₅₀ of polycrystalline ternary material ranges from 7 µm to 20 µm; preferably, ranges from 8 µm to 12 µm;
and/or a median particle size D₅₀ of lithium cobalt oxide ranges from 5 µm to 25 µm; preferably, ranges from 12 µm to 18 µm.

9. The positive electrode plate according to any one of claims 1 to 8, **characterized in that** the first active material layer includes a first conductive agent and a first binder;
preferably, based on a total weight of the first active material layer, weight content of the first active material ranges from 80 wt% to 99.8 wt%, weight content of the first conductive agent ranges from 0.1 wt% to 10 wt%, and weight content of the first binder ranges from 0.1 wt% to 10 wt%.

10. The positive electrode plate according to any one of claims 1 to 9, **characterized in that** the second active material layer includes a second conductive agent and a second binder;
preferably, based on a total weight of the second active material layer, weight content of the second active material ranges from 80 wt% to 99.8 wt%, weight content of the second conductive agent ranges from 0.01 wt% to 10 wt%, and weight content of the second binder ranges from 0.01 wt% to 10 wt%.

11. A battery, **characterized in that** the battery comprises the positive electrode plate according to any one of claims 1 to 10.

12. The battery according to claim 11, **characterized in that** the battery comprises a first region and a second region;
the first region is a region comprising the first active material layer, and a CB value of the first region is: CB₁ = (Surface density of a negative electrode plate * Specific capacity of a negative electrode active material * Content of the negative electrode active material)/(Surface density of the positive electrode plate * Specific capacity of a first active material in the first region * Content of the first active material in the first region); and
the second region is a region comprising the second active material layer, and a CB value of the second region is: CB₂ = (Surface density of the negative electrode plate * Specific capacity of the negative electrode active material * Content of the negative electrode active material)/(Surface density of the positive electrode plate * Specific capacity of a second active material in the second region * Content of the second active material in the second region), wherein CB₁ < CB₂, preferably, 0 < CB₂ - CB₁ ≤ 0.15, more preferably, 0.0008 ≤ CB₂ - CB₁ ≤ 0.06.

13. The battery according to claim 11 or 12, **characterized in that** the battery comprises a negative electrode plate.

14. The battery according to claim 13, **characterized in that** a surface density of the negative electrode plate ranges from 4 mg/cm² to 16 mg/cm²;
and/or, a press density of the negative electrode plate ranges from 1.5 to mg/cm³ to 1.9 g/cm³.

15. The battery according to claim any one of claims 11 to 14, **characterized in that** the negative electrode active material layer includes a third conductive agent and a third binder;
preferably, based on a total weight of the negative electrode active material layer, weight content of the negative electrode active material ranges from 80 wt% to 99.8 wt%, weight content of the third conductive agent ranges from 0.1 wt% to 10 wt%, and weight content of the third binder ranges from 0.1 wt% to 10 wt%.
